(19) Europäisches Patentamt
European Patent Office
Office européen des brevets

(11) **EP 4 602 927 A1**

(12) **EUROPEAN PATENT APPLICATION**
published in accordance with Art. 153(4) EPC

(43) Date of publication:
**20.08.2025  Bulletin 2025/34**

(21) Application number: 23888926.5

(22) Date of filing: 26.09.2023

(51) International Patent Classification (IPC):
*A23L 13/50* (2016.01)    *A23L 13/70* (2023.01)
*A23L 5/10* (2016.01)    *A23L 3/36* (2006.01)
*A23L 13/40* (2023.01)    *A23P 30/10* (2016.01)

(52) Cooperative Patent Classification (CPC):
A23B 2/80; A23L 5/10; A23L 13/40; A23L 13/50;
A23L 13/70; A23P 30/10

(86) International application number:
**PCT/KR2023/014875**

(87) International publication number:
**WO 2024/101662 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  07.11.2022  KR 20220147067

(71) Applicant: **CJ CheilJedang Corporation**
**Seoul 04560 (KR)**

(72) Inventors:
• **CHOI, Jihun**
  **Seoul 04560 (KR)**
• **KIM, Jimin**
  **Seoul 04560 (KR)**
• **JO, Sung Hoon**
  **Seoul 04560 (KR)**
• **KO, Young-mi**
  **Seoul 04560 (KR)**
• **LEE, Seok Jae**
  **Seoul 04560 (KR)**
• **SONG, Minseok**
  **Seoul 04560 (KR)**

(74) Representative: **Meissner Bolte Partnerschaft
mbB**
**Patentanwälte Rechtsanwälte**
**Postfach 86 06 24**
**81633 München (DE)**

(54) **GRILLED CHICKEN BREAST-BASED FOOD AND METHOD FOR PRODUCING SAME**

(57)    The present disclosure relates to a grilled chicken breast steak and a grilled chicken breast hot bar in the shape of a chicken leg; and a method for producing the same.

[FIG. 1]

## Description

### [Technical Field]

The present disclosure relates to a grilled chicken breast steak and a grilled chicken breast hot bar in the shape of a chicken leg; and a method for producing the same.

### [Background Art]

Chicken breasts contain 1.5 times the protein content and at least 10 times the fat content compared to similar cuts of pork, resulting in a mild flavor. However, due to the dry and firm texture of the meat fibers, chicken breasts are one of the least preferred cuts among the various cuts of chicken.

Chicken breasts are typically consumed by cooking in hot water or steaming. Since such cooking methods do not offer a significantly superior sensory appeal (Ki-hong, Jeon, et al., Culinary Science & Hospitality Research, 2014, vol. 20, no. 3, pp. 201 - 213), some consumers purchase chicken breasts merely as protein supplements for diet purposes or muscle building, thereby posing limitations in promoting consumption.

Further, ground chicken breast mixture has a runny texture, which makes it challenging to retain its shape. Therefore, conventional chicken breast-processed products have limited shapes, such as cubes, steaks, and bars.

Accordingly, chicken breast products have employed various heat treatment processes, such as steaming and oven treatment, to promote chicken breast consumption, but consumer preference still remains low.

Therefore, there is a need to develop various seasonings for a more flavorful and healthier consumption of chicken breasts, as well as to advance the processing technologies, such as shaping, to meet consumer preferences.

### [Disclosure]

### [Technical Problem]

The technical problem of the present disclosure is to provide a method for producing grilled chicken breast food products and a grilled chicken breast food product produced by the method.

### [Technical Solution]

An object of the present disclosure is to provide a method for producing grilled chicken breast food products.

Another object of the present disclosure is to provide a grilled chicken breast food product produced by the method of the present disclosure.

### [Advantageous Effects]

The method of the present disclosure can produce steaks or hot bars with excellent flavor and a soft texture by combining coarsely ground chicken breast with seasonings, shaping the mixture into a shape of high consumer preference, such as the shape of a steak or a chicken leg, and heat treating the shaped product in a stepwise manner.

### [Brief Description of the Drawings]

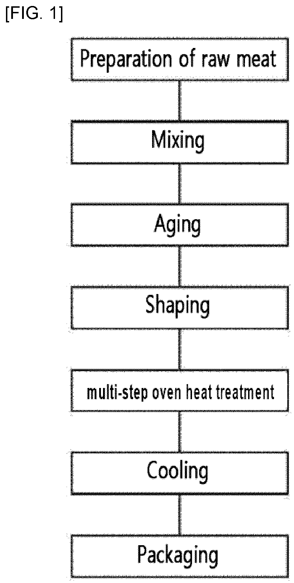

FIG. 1 is a schematic diagram representing the manufacturing process of grilled chicken breast steaks and grilled chicken breast hot bars in the shape of a chicken leg.

### [Detailed Description of Preferred Embodiments]

The present disclosure will be described in detail as follows. Meanwhile, each description and embodiment described herein may be applied to other descriptions and embodiments, respectively. That is, all combinations of various elements disclosed in the present disclosure fall within the scope of the present disclosure. Further, the scope of the present disclosure is not limited by the specific description described below. Furthermore, a number of papers and patent documents are referenced and cited throughout this specification. The disclosures of the cited papers and patent documents are incorporated herein by reference in their entirety to further clarify the level of art and the description of the present disclosure.

An aspect of the present disclosure provides a method for producing grilled chicken breast food products.

Currently, chicken breast products employing various heat treatment processes, such as steaming and oven treatment, have been developed to promote chicken breast consumption, but due to the dry and firm texture of the meat fibers of chicken breast, consumer preference still remains low.

Further, ground chicken breast mixture has a runny texture, which makes it challenging to retain its shape. Therefore, common chicken breast products have limited shapes, such as cubes, steaks, and bars.

The method of the present disclosure can produce steaks or hot bars with excellent flavor and a soft texture by combining coarsely ground chicken breast with seasoning, shaping the mixture into a shape of high consumer preference, such as a steak or a chicken leg, and heat treating the shaped product in a stepwise manner. Additionally, the method of the present disclosure reduces saturated fat and sodium contents by adding sunflower oil and sea salt instead of conventional pork fat and refined salt, increases protein content by adding whey protein powder and isolated soy protein, and improves shapability and mechanical properties by adding isolated soy protein and breadcrumbs, thereby providing an excellent texture. Further, by adding these supplementary ingredients and performing a three-step process of heat treatment and cooking in an oven, the method of the present disclosure can produce chicken breast food products with enhanced tenderness and moistness.

Specifically, the method of the present disclosure may comprise:

(a) mixing ground chicken breast with brine, whey protein powder, and vegetable oil;
(b) brining the chicken breast mixture;
(c) shaping the brined chicken breast mixture;
(d) heat treating the shaped chicken breast mixture by a multi-step oven heat treatment; and
(e) cooling the chicken breast mixture.

In the method of the present disclosure, the step (a) may be mixing ground chicken breast with brine, whey protein powder, and vegetable oil.

The method of the present disclosure may further comprise washing the chicken breast and removing impurities, bones, *etc.* before the step (a).

The grinding may be cutting the chicken breast into a size range comprising an upper limit selected from 40 mm or less, 30 mm or less, 20 mm or less, 10 mm or less, and 5 mm or less.

The ground chicken breast may be included in an amount of 60 wt% to 80 wt% based on the total weight of the chicken breast mixture. For example, the ground chicken breast may be included within a range comprising a lower limit selected from 60 wt% or more, 62 wt% or more, 64 wt% or more, 66 wt% or more, and 68 wt% or more, and/or an upper limit selected from 80 wt% or less, 78 wt% or less, 76 wt% or less, 74 wt% or less, and 72 wt% or less, based on the total weight of the chicken breast mixture.

The brine may comprise sea salt and a phosphate.

The brine may comprise sea salt and a phosphate in a weight ratio of 2 to 6:1, 3 to 5:1, or 3 to 5:1.

The brine may be included in an amount of 0.5 wt% to 1.5 wt% based on the total weight of the chicken breast mixture. For example, the brine may be included within a range comprising a lower limit selected from 0.5 wt% or more, 0.6 wt% or more, 0.7 wt% or more, 0.8 wt% or more, and 0.9 wt% or more, and/or an upper limit selected from 1.5 wt% or less, 1.4 wt% or less, 1.3 wt% or less, 1.2 wt% or less, and 1.1 wt% or less, based on the total weight of the chicken breast mixture.

The sea salt may comprise 70 wt% or less of sodium. For example, the sea salt may comprise sodium within a range comprising an upper limit selected from 70 wt% or less, 69 wt% or less, 68 wt% or less, 67 wt% or less, 66 wt% or less, and 65 wt% or less based on the total weight of the sea salt.

The whey protein powder may be included in an amount of 0.5 wt% to 1.5 wt% based on the total weight of the chicken breast mixture. For example, the whey protein powder may be included within a range comprising a lower limit selected from 0.5 wt% or more, 0.6 wt% or more, 0.7 wt% or more, and 0.8 wt% or more, and/or an upper limit selected from 1.5 wt% or less, 1.3 wt% or less, 1.2 wt% or less, and 1.1 wt% or less, based on the total weight of the chicken breast mixture.

The vegetable oil can be used without limitation as long as the vegetable oil is used in the production of a food product. Examples of the vegetable oil comprise sunflower oil, canola oil, and corn oil, but are not limited thereto.

The vegetable oil may be included in an amount of 5 wt% to 10 wt% based on the total weight of the chicken breast mixture. For example, the vegetable oil may be included within a range comprising a lower limit selected from 5 wt% or more, 5.5 wt% or more, 6 wt% or more, and 6.5 wt% or more, and/or an upper limit selected from 10 wt% or less, 9 wt% or less, 8 wt% or less, and 7.5 wt% or less, based on the total weight of the chicken breast mixture.

By mixing with sea salt and a phosphate, the sodium content of the produced chicken breast food product may be reduced compared with the mixing with refined salt.

By mixing with vegetable oil, the saturated fat content of the produced chicken breast food product may be reduced compared with the mixing with animal fat.

The step (a) may further comprise mixing with sugar, basil, or purified water.

The sugar may be included in an amount of 1 wt% to 7 wt% based on the total weight of the chicken breast mixture. For example, the sugar may be included within a range comprising a lower limit selected from 1 wt% or more, 2 wt% or more, 3 wt% or more, and 3.5 wt% or more, and/or an upper limit selected from 7 wt% or less, 6 wt% or less, 5 wt% or less, and 4.5 wt% or less, based on the total weight of the chicken breast mixture.

The basil may be included in an amount of 0.01 wt% to 0.05 wt% based on the total weight of the chicken breast mixture. For example, the basil may be included within a range comprising a lower limit selected from 0.01 wt% or more, 0.015 wt% or more, 0.02 wt% or more, 0.025 wt% or more, and 0.027 wt% or more, and/or an upper limit selected from 0.05 wt% or less, 0.045 wt% or less, 0.04 wt% or less, and 0.035 wt% or less, based on the total weight of the chicken breast mixture.

The purified water may be included in an amount of 10 wt% to 14 wt% based on the total weight of the chicken breast mixture. For example, the purified water may be included within a range comprising a lower limit selected from 10 wt% or more, 10.5 wt% or more, 11 wt% or more, and 11.5 wt% or more, and/or an upper limit selected from 14 wt% or less, 13.5 wt% or less, 13 wt% or less, and 12.5 wt% or less, based on the total weight of the chicken breast mixture.

The step (a) may further comprise mixing with isolated soy protein and breadcrumbs.

The isolated soy protein may be included in an amount of 0.1 wt% to 0.5 wt% based on the total weight of the chicken breast mixture. For example, the isolated soy protein may be included within a range comprising a lower limit selected from 0.1 wt% or more, 0.12 wt% or more, 0.14 wt% or more, 0.16 wt% or more, and 0.18 wt% or more, and/or an upper limit selected from 0.5 wt% or less, 0.4 wt% or less, 0.3 wt% or less, and 0.25 wt% or less, based on the total weight of the chicken breast mixture.

The breadcrumbs may be included in an amount of 1 wt% to 3 wt% based on the total weight of the chicken breast mixture. For example, the breadcrumbs may be included within a range comprising a lower limit selected from 1 wt% or more, 1.2 wt% or more, 1.4 wt% or more, 1.6 wt% or more, and 1.8 wt% or more, and/or an upper limit selected from 3 wt% or less, 2.8 wt% or less, 2.6 wt% or less, 2.4 wt% or less, and 2.2 wt% or less, based on the total weight of the chicken breast mixture.

By the additional mixing of the isolated soy protein and breadcrumbs, the shapability of the chicken breast mixture may be improved.

The mixing with the isolated soy protein and whey protein powder may increase the protein content of the chicken breast food product compared with mixing without the isolated soy protein and whey protein powder.

In one embodiment of the present disclosure, the chicken breast mixture may comprise 60 wt% to 80 wt% of chicken breast, 0.5 wt% to 1.5 wt% of brine, 0.5 wt% to 1.5 wt% of whey protein powder, 5 wt% to 10 wt% of vegetable oil, 1 wt% to 7 wt% of sugar, 0.01 wt% to 0.05 wt% of basil, 10 wt% to 14 wt% of purified water, 1 wt% to 3 wt% of breadcrumbs, and 0.1 wt% to 0.5 wt% of isolated soy protein, based on the total weight of the chicken breast mixture.

In the method of the present disclosure, the step (b) may be brining the chicken breast mixture; The brining may be aging the chicken breast mixture prepared in the step (a).

The brining may be aging the chicken breast mixture at 2°C to 8°C. The brining may be aging the chicken breast mixture for 12 to 24 hours.

For example, the brining may be performed at a temperature within a range comprising a lower limit selected from 2°C or more, 3°C or more, 4°C or more, and 4.5°C or more, and/or an upper limit selected from 8°C or less, 7°C or less, 6°C or less, and 5.5°C or less. Additionally, the brining may be performed for a duration within a range comprising a lower limit selected from 12 hours or more, 14 hours or more, 15 hours or more, and 16 hours or more, and/or an upper limit selected from 24 hours or less, 22 hours or less, 21 hours or less, and 20 hours or less.

In the method of the present disclosure, the step (c) may be shaping the brined chicken breast mixture.

The shaping may be performed at 0°C to 10°C. For example, the shaping may be performed at a temperature within a range comprising a lower limit selected from 0°C or more, 1°C or more, 3°C or more, and 4°C or more, and/or an upper limit selected from 10°C or less, 9°C or less, 8°C or less, and 7°C or less.

The shape of the shaping is not particularly limited, and may be, for example, the shape of a steak or a chicken leg.

In the method of the present disclosure, the step (d) may be heat treating the shaped chicken breast mixture by a multi-step oven heat treatment.

The multi-step oven heat treatment may comprise a first heat treatment in an oven, a second heat treatment in an oven, and a third heat treatment in an oven.

The multi-step oven heat treatment may comprise a first heat treatment in an oven at 160°C to 200°C; a second heat treatment in an oven at 140°C to 180°C; and a third heat treatment in an oven at 140°C to 210°C. The multi-step oven heat treatment may comprise a first heat treatment in an oven for 1 to 5 minutes; a second heat treatment in an oven for 15 to 25 minutes; and a third heat treatment in an oven for 1 to 4 minutes.

The temperature of the first heat treatment in an oven may be within a range comprising a lower limit selected from 160°C or more, 170°C or more, 172°C or more, 174°C or more, 176°C or more, and 178°C or more, and/or an upper limit selected from 200°C or less, 190°C or less, 188°C or less, 186°C or less, 184°C or less, and 182°C or less. Further, the temperature of the first heat treatment in an oven may be within a range comprising a lower limit selected from 1 minute or more, 2 minutes or more, and 3 minutes or more, and/or an upper limit selected from 5 minutes or less, 4 minutes or less, and 3 minutes or less.

By the first heat treatment in an oven, the exterior of the chicken breast mixture can be cooked and set to prevent the internal moisture from escaping.

The temperature of the second heat treatment in an oven may be within a range comprising a lower limit selected from 140°C or more, 150°C or more, 152°C or more, 154°C or more, 156°C or more, and 158°C or more, and/or an upper limit selected from 180°C or less, 170°C or less, 168°C or less, 166°C or less, 164°C or less, and 162°C or less. Further, the temperature of the second heat treatment in an oven may be within a range comprising a lower limit selected from 15 minute or more, 16 minutes or more, and 17 minutes or more, and/or an upper limit selected from 25 minutes or less, 23 minutes or less, and 21 minutes or less.

By the second heat treatment in an oven, the chicken breast mixture can be thoroughly cooked throughout the interior to ensure safety from microorganisms.

The temperature of the third heat treatment in an oven may be within a range comprising a lower limit selected from 160°C or more, 170°C or more, 180°C or more, 190°C or more, 195°C or more, and 197°C or more, and/or an upper limit selected from 210°C or less, 208°C or less, 206°C or less, 204°C or less, 202°C or less, and 201°C or less. Further, the temperature of the third heat treatment in an oven may be within a range comprising a lower limit selected from 1 minute or more, 2 minutes or more, and 3 minutes or more, and/or an upper limit selected from 5 minutes or less, 4 minutes or less, and 3 minutes or less.

By the third heat treatment in an oven, the outer surface of the chicken breast mixture can be made to have a grilled appearance.

The chicken breast food product produced by multi-step oven heat treatment, comprising the first to third heat treatments in an oven, may have enhanced tenderness and moistness compared with the chicken breast food products produced by a single-step process of heat treatment in a common steam oven.

The multi-step oven heat treatment may further comprise grill marking.

The grill marking may be leaving grill marks on the outer surface of the chicken breast mixture by heating on a grill marker and direct flame torching.

By the grill marking, a grilled shape and scent may be added to the outer surface of the chicken breast.

In the method of the present disclosure, the step (e) may be cooling the chicken breast treated by multi-step oven heat treatment.

Specifically, the cooling may be air cooling and/or rapid freezing.

The cooling may be performed by a method known in the art. For example, the cooling may be cooling at a temperature of -20°C or less for 15 minutes or more, or specifically at a temperature of -20°C to -40°C for 15 to 30 minutes, but is not limited thereto.

The cooling may be cooling such that the core temperature of the chicken breast becomes 20°C or less, but is not limited thereto.

Further, the method of the present disclosure may further comprise sterilizing the cooled chicken breast.

Further, the method of the present disclosure may further comprise packaging the cooled chicken breast.

The chicken breast food product produced by the method of the present disclosure may further comprise supplementary ingredients.

The supplementary ingredients may be, for example, sweeteners, acidity adjusting agents, flavoring agents, refined salts, or stabilizing agents, but are not limited thereto. Additionally, ingredients known to be typically used in producing chicken breast food products may be further included.

The chicken breast food product produced by the method of the present disclosure may comprise 400 mg/100 g or less of sodium. For example, the chicken breast product of the present disclosure may comprise sodium within a range comprising an upper limit selected from 395 mg/100 g or less, 390 mg/100 g or less, 388 mg/100 g or less, 386 mg/100 g or less, and 385 mg/100 g or less.

The chicken breast food product produced by the method of the present disclosure may comprise 1 g/100 g or less of saturated fat. For example, the chicken breast food product of the present disclosure may comprise saturated fat within a range comprising an upper limit selected from 0.98 g/100 g or less, 0.96 g/100 g or less, 0.94 g/100 g or less, 0.92 g/100 g or less, and 0.91 g/100 g or less.

The chicken breast food product produced by the method of the present disclosure may comprise 20 g/100 g or more of protein. For example, the chicken breast product of the present disclosure may comprise protein within a range comprising a lower limit selected from 22 g/100 g or more, 24 g/100 g or more, 26 g/100 g or more, 28 g/100 g or more, and 30 g/100 g or more.

The chicken breast food product produced by the method of the present disclosure may have a hardness of 3 kg to 6 kg. For example, the chicken breast product of the present disclosure may have a hardness within a range comprising a lower limit selected from 3 kg or more, 3.5 kg or more, 4 kg or more, 4.5 kg or more, and 5 kg or more, and an upper limit selected from 6 kg or less, 5.8 kg or less, 5.6 kg or less, 5.4 kg or less, and 5.2 kg or less.

The chicken breast food product produced by the method of the present disclosure may have a gumminess of 1 kg to 1.8 kg. For example, the chicken breast product of the present disclosure may have a gumminess within a range comprising a lower limit selected from 1 kg or more, 1.1 kg or more, 1.2 kg or more, 1.3 kg or more, and 1.4 kg or more, and an upper limit selected from 1.8 kg or less, 1.78 kg or less, 1.76 kg or less, and 1.74 kg or less.

The chicken breast food product produced by the method of the present disclosure may have a chewiness of 0.5 kg to 0.9 kg. For example, the chicken breast product of the present disclosure may have a chewiness within a range comprising a lower limit selected from 0.5 kg or more, 0.6 kg or more, 0.7 kg or more, and 0.8 kg or more, and an upper limit selected from 0.9 kg or less, 0.88 kg or less, 0.86 kg or less, and 0.84 kg or less.

Another object of the present disclosure provides a grilled chicken breast food product produced by the method of the present disclosure.

The grilled chicken breast food product is as described above.

### [Mode for Carrying Out the Invention]

The present disclosure will be described in detail by way of Examples. However, these Examples are given for illustrative purposes only, and the scope of the invention is not intended to be limited by these Examples. Meanwhile, the technical descriptions absent in the present disclosure may be sufficiently understood and readily practiced by a person of ordinary skill in the art of the present disclosure or related art.

### Preparation Examples and Comparative Examples

### Preparation Example 1: Preparation of grilled chicken breast steak

The chicken breast and supplementary ingredients were prepared by weighing them as follows: 70 wt% chicken breast, 7 wt% of sunflower oil, 1 wt% of brine (sea salt:phosphate = 4:1 (w/w)), 4 wt% of sugar, 1 wt% of whey protein powder, 4.97 wt% of composite seasoning (containing garlic, onion, and ginger), 0.03 wt% of basil, and 12 wt% of purified water. The sea salt comprised sodium and potassium in a ratio of 65:35 (w/w).

Impurities, bones, *etc.* were removed from the refrigerated chicken breast, which was then cut into 20 mm pieces and coarsely ground.

The coarsely ground chicken breast, sea salt, and phosphate were placed into a vacuum mixer (VMR 1300, Seydelmann, Germany) and mixed for 2 minutes. Subsequently, sugar, whey protein powder, basil, and purified water were added and mixed for 5 minutes. Finally, sunflower oil was added and mixed for another 5 minutes.

After completing the mixing, the mixture was subjected to brining by aging at 5°C for 12 to 24 hours.

The brined mixture was placed into a forming machine and shaped using a steak-shaped mold. The temperature of the mixture was maintained at 0°C to 10°C to ensure proper shape retention.

The shaped mixture was arranged on the chain of a continuous oven without overlapping for heat treatment and cooking. The shaped mixture was subjected to a first heat treatment in an oven (GSO(MPO)-5072JT, HI-COOK, Japan) at 180°C for 4 minutes to cook and set the exterior of the mixture, thereby preventing the internal moisture from escaping. Subsequently, the mixture was subjected a second heat treatment in an oven (Pegasus 60, HI-COOK, Japan) at 160°C for 20 minutes such that the mixture is thoroughly cooked. Then, the mixture was subjected to a third heat treatment in an oven (BSCE-570X, HI-COOK, Japan) at 200°C for 3 minutes to create an appearance resembling a grilled surface on the exterior using superheated steam. Finally, the mixture was passed through a grill marker (Grill-marker, HI-COOK, Japan) with direct flame torching to leave grilled marks on the surface through direct flame torching, thereby adding grill marks and a grilled aroma.

The heat treated and cooked mixture was thoroughly frozen at -20°C to -40°C for 15 to 30 minutes and then air-cooled to ensure that the core temperature reached 20°C or less.

The air-cooled mixture was vacuum-packed, passed through an X-ray machine and a metal detector, and then sterilized using a spray-type sterilizer (Hyupjin, Korea).

### Preparation Example 2: Preparation of grilled hot bar in the shape of chicken leg

The chicken breast and supplementary ingredients were prepared by weighing them as follows: 70 wt% of chicken breast, 7 wt% of sunflower oil, 1 wt% of brine (sea salt:phosphate = 4:1 (w/w)), 4 wt% of sugar, 1 wt% of whey protein powder, 2 wt% of breadcrumbs, 0.2 wt% of isolated soy protein, 2.77 wt% of composite seasoning (containing garlic, onion, and ginger), 0.03 wt% of basil, and 12 wt% of purified water. The sea salt comprised sodium and potassium in a ratio of 65:35 (w/w).

Impurities, bones, *etc.* were removed from the refrigerated chicken breast, which was then cut into 20 mm pieces and coarsely ground.

The coarsely ground chicken breast, sea salt, and phosphate were placed into a vacuum mixer (VMR 1300, Seydelmann, Germany) and mixed for 2 minutes. Subsequently, sugar, whey protein powder, breadcrumbs, isolated soy protein, basil, and purified water were added and mixed for 5 minutes. Finally, sunflower oil was added and mixed for another 5 minutes.

After completing the mixing, the mixture was subjected to brining by aging at 5°C for 12 to 24 hours.

The brined mixture was placed into a forming machine and shaped using a chicken leg-shaped mold. The temperature of the mixture was maintained at 0°C to 10°C to ensure proper shape retention.

The shaped mixture was arranged on the chain of a continuous oven without overlapping for heat treatment and cooking. The shaped mixture was subjected to first heat treatment in an oven (GSO(MPO)-5072JT, HI-COOK, Japan) at 180°C for 3 minutes to cook and set the exterior of the mixture, thereby preventing the internal moisture from escaping. Subsequently, the mixture was subjected second heat treatment in an oven (Pegasus 60, HI-COOK, Japan) at 160°C for 18 minutes such that the mixture is thoroughly cooked. Then, the mixture was subjected to third heat treatment in an oven (BSCE-570X, HI-COOK, Japan) at 200°C for 2 minutes to create an appearance resembling a grilled surface on the exterior using superheated steam. Finally, the mixture was passed through a grill marker (Grill-marker, HI-COOK, Japan) with direct flame torching to leave grilled marks on the surface through direct flame torching, thereby adding grill marks and a grilled scent.

The heat treated and cooked mixture was thoroughly frozen at -20°C to -40°C for 15 to 30 minutes and then air-cooled to ensure that the core temperature reached 20°C or less.

The air-cooled mixture was vacuum-packed, passed through an X-ray machine and a metal detector, and then sterilized using a spray-type sterilizer (Hyupjin, Korea).

A schematic diagram representing the manufacturing process of Preparation Examples 1 and 2 is shown in FIG. 1.

**Comparative Example 1: Preparation of product comprising refined salt and pork fat**

A grilled chicken breast steak was prepared in the same manner as in Preparation Example 1, except that conventional refined salt was added instead of sea salt, and conventional pork fat was added instead of sunflower oil, both in the same amount.

**Comparative Example 2: Preparation of product without whey protein powder and isolated soy protein**

A grilled chicken breast hot bar in the shape of a chicken leg was prepared in the same manner as in Preparation Example 1, except that whey protein powder and isolated soy protein were excluded from the supplementary ingredients.

**Comparative Example 3: Preparation of product without isolated soy protein and breadcrumbs**

A grilled chicken breast hot bar in the shape of a chicken leg was prepared in the same manner as in Preparation Example 2, except that isolated soy protein and breadcrumbs were excluded from the supplementary ingredients.

**Comparative Example 4: Preparation of product with heat treatment in a common steam oven**

A grilled chicken breast steak was prepared in the same manner as in Preparation Example 1, except that the single-step process of heat treatment and cooking was performed in a common steam oven at 100°C for 23 to 27 minutes.

**Experimental Examples**

**Experimental Example 1: Comparison of sodium and saturated fat contents and sensory appeal with product comprising refined salt and pork fat**

The sodium content and saturated fat content of Preparation Example 1, comprising sea salt and sunflower oil, and Comparative Example 1, comprising refined salt and pork fat, were measured and compared using the Food Code General Test Method 2.2.1.6, and the Food Code General Test Method 2.1.5.4, respectively.

The sensory appeal analysis was conducted with 10 trained researchers, who assessed the samples based on appearance, tenderness, moistness, and overall preference using a 5-point scale (5: very good, 4: good, 3: average, 2: poor, 1: very poor).

As a result, Preparation Example 1, comprising sea salt and sunflower oil, had lower sodium and saturated fat contents than Comparison Example 1, comprising refined salt and pork fat, as shown in Table 1 below.

Further, the sensory appeal analysis showed that Preparation Example 1 had superior tenderness and moistness compared with Comparative Example 1.

Accordingly, it was found that adding sea salt and vegetable oil when preparing grilled chicken breast steak and grilled chicken breast hot bar in the shape of a chicken leg results in lower sodium and saturated fat contents and an increase in tenderness and moistness, thereby increasing overall preference.

[Table 1]

| | Sodium (mg/100 g) | Saturated Fat (g/100 g) | Sensory Appeal Analysis | | | |
| --- | --- | --- | --- | --- | --- | --- |
| | | | Appearance | Tenderness | Moistness | Overall Preference |
| Preparation Example 1 | 384.98 | 0.90 | 3.98±0.52 | 4.01±0.48 | 4.04±0.25 | 4.02±0.41 |
| Comparative Example 1 | 497.50 | 2.36 | 3.88±0.48 | 3.89±0.31 | 3.78±0.35 | 3.89±0.35 |

**Experimental Example 2: Comparison of protein content and sensory appeal with product without whey protein powder and isolated soy protein**

The protein content of Preparation Example 2, comprising whey protein powder and isolated soy protein, and Comparative Example 2, prepared without whey protein powder and isolated soy protein, was measured and compared using the Food Code General Test Method 2.1.3.1.

The sensory appeal analysis was conducted with 10 trained researchers, who assessed the samples based on appearance, tenderness, moistness, and overall preference using a 5-point scale.

As a result, Preparation Example 2, prepared by comprising whey protein powder and isolated soy protein, exhibited a slight increase in the protein content and sensory appeal analysis results compared with Comparative Example 2, prepared without isolated soy protein, as shown in Table 2 below.

[Table 2]

| | Protein (g/100g) | Sensory Appeal Analysis | | | |
| --- | --- | --- | --- | --- | --- |
| | | Appearance | Tenderness | Moistness | Overall Preference |
| Preparation Example 1 | 20.01 | 3.99±0.57 | 3.89±0.42 | 3.95±0.38 | 3.95±0.41 |
| Comparative Example 2 | 19.15 | 3.92±0.46 | 3. 86±0.48 | 3.90±0.34 | 3.92±0.46 |

**Experimental Example 3: Comparison of shapability, properties, and sensory appeal with product prepared without breadcrumbs and isolated soy protein**

The shapability (spreadability (%), thickness shrinkage (%), heat treatment yield (%), diameter shrinkage after heat treatment (%), and thickness shrinkage after heat treatment (%)) of Preparation Example 2, comprising isolated soy protein and breadcrumbs, and Comparative Example 3, prepared without isolated soy protein and breadcrumbs, was measured and compared as follows.

Specifically, the spreadability (%) and thickness shrinkage (%) were measured by comparing the diameter and thickness of the shaped mixture immediately after shaping and the diameter and thickness 5 minutes after shaping to determine the level at which the shape of the mixture was maintained after shaping.

Further, heat treatment yield (%), diameter shrinkage after heat treatment (%), and thickness shrinkage after heat treatment (%) were measured by comparing the weight, diameter, and thickness of the shaped mixture immediately after shaping and the weight, diameter, and thickness of the mixture after the heat treatment and cooking process to determine the shrinkage rate of the mixture after heating.

Further, the spreadability (%), thickness shrinkage (%), heat treatment yield (%), diameter shrinkage after heat treatment (%), and thickness shrinkage after heat treatment (%) were calculated using the following equations.

$$\text{Spreadability (\%)} = \frac{\text{Diameter 5 min after shaping (mm)}}{\text{Diameter immediately after shaping (mm)}} \times 100$$

$$\text{Thickness shrinkage (\%)} = \frac{\text{Thickness immediately after shaping (mm)-Thickness 5 min after shaping (mm)}}{\text{Thickness immediately after shaping (mm)}} \times 100$$

$$\text{Heat treatment yield (\%)} = \frac{\text{Weight after heat treatment (g)}}{\text{Weight immediately after shaping (g)}} \times 100$$

$$\text{Diameter shrinkage after heat treatment (\%)} = \frac{\text{Diameter immediately after shaping(mm)} - \text{Diameter after heat treatment(mm)}}{\text{Diameter immediately after shaping (mm)}} \times 100$$

$$\text{Thickness shrinkage after heat treatment (\%)} = \frac{\text{Thickness immediately after shaping (mm)} - \text{Thickness after heat treatment (mm)}}{\text{Thickness immediately after shaping (mm)}} \times 100$$

As a result, Preparation Example 2, comprising isolated soy protein and breadcrumbs, exhibited low spreadability and thickness shrinkage after heat treatment and thus maintained its form, whereas Comparative Example 2, prepared without isolated soy protein and breadcrumbs, did not maintain its form and exhibited spreading, as shown in Table 3 below.

[Table 3]

| | Spreadability (%) | Thickness Shrinkage (%) | Heat Treatment Yield (%) | Diameter Shrinkage After Heat Treatment (%) | Thickness Shrinkage After Heat Treatment (%) |
|---|---|---|---|---|---|
| Preparation Example 2 | 101.11±1.25 | 5.88±0.95 | 89.60±1.16 | 9.18±0.95 | -10.00±1.09 |
| Comparative Example 3 | 104.44±0.85 | 24.12±2.35 | 83.70±2.27 | 14.32±1.34 | -29.09±2.05 |

Mechanical properties were analyzed using a texture analyzer (TA-XT2i, Stable Micro Systems Ltd., Surrey, England) for hardness (kg), springiness, gumminess (kg), and chewiness (kg).

As a result, Preparation Example 2 had lower hardness, springiness, gumminess, and chewiness compared with Comparative Example 3, as shown in Table 4 below.

[Table 4]

| | Hardness (kg) | Springiness | Gumminess (kg) | Chewiness (kg) |
|---|---|---|---|---|
| Preparation Example 2 | 5.03±0.69 | 0.54±0.04 | 1.60±0.14 | 0.86±0.11 |
| Comparative Example 3 | 7.17±0.68 | 0.55±0.07 | 2.17±0.30 | 1.19±0.26 |

The sensory appeal analysis was conducted with 10 trained researchers, who assessed the samples based on appearance, tenderness, moistness, and overall preference using a 5-point scale.

As a result, Preparation Example 2 exhibited superior tenderness and moistness compared with Comparative Example 3, as shown in Table 5 below.

Accordingly, it was found that adding isolated soy protein and breadcrumbs when preparing grilled chicken breast steak and grilled chicken breast hot bar in the shape of a chicken leg results in improved shapability which enables easy shaping, improved mechanical properties which provides excellent texture, and enhanced tenderness and moistness which increase overall preference.

[Table 5]

| | Appearance | Tenderness | Moistness | Overall Preference |
|---|---|---|---|---|
| Preparation Example 2 | 3.92±0.57 | 3.89±0.42 | 3.94±0.38 | 3.95±0.41 |
| Comparative Example 3 | 3.88±0.46 | 3.78±0.48 | 3.77±0.34 | 3.80±0.46 |

**Experimental Example 4: Comparison of sensory appeal with product heat treated with a common steam oven**

A sensory appeal analysis was performed on Preparation Example 1, prepared by using a three-step process of heat treatment and cooking in an oven, and Comparative Example 4, prepared by using a single-step heat treatment and cooking in a general steam oven.

The sensory appeal analysis was conducted with 80 general consumers, who assessed the samples based on appearance, tenderness, moistness, and overall preference using a 5-point scale.

As a result, Preparation Example 1, produced using a three-step process of heat treatment and cooking in an oven, exhibited superior appearance, tenderness, and moistness compared with Comparative Example 4, produced using a single-step process of heat treatment and cooking in a common steam oven, as shown in Table 6 below.

Accordingly, it was found that performing a three-step process of heat treatment and cooking in an oven to produce grilled chicken breast steak and grilled chicken breast hot bar in the shape of a chicken leg results in enhanced tenderness and moistness, as well as enhanced preference of appearance, thereby increasing overall preference.

[Table 6]

|  | Appearance | Tenderness | Moistness | Overall Preference |
|---|---|---|---|---|
| Preparation Example 1 | 3.99±0.31 | 4.19±0.38 | 4.12±0.34 | 4.03±0.31 |
| Comparative Example 4 | 3.27±0.30 | 3.71±0.29 | 3.78±0.38 | 3.56±0.34 |

Accordingly, the grilled chicken breast steak and grilled hot bar in the shape of a chicken leg produced by the method of the present disclosure have not only been shaped into a shape of high consumer preference, such as the shape of a steak or a chicken leg, but have also been reduced in the saturated fat and sodium contents by adding sunflower oil and sea salt instead of conventional pork fat and refined salt, increased in protein content by adding whey protein powder and isolated soy protein, increased in shapability and improved in mechanical properties by adding isolated soy protein and breadcrumbs, thereby providing an excellent texture. Further, by adding the supplementary ingredients and performing a three-step process of heat treatment and cooking in an oven, chicken breast products with enhanced tenderness and moistness could be produced.

As set forth above, a person skilled in the art will be able to understand that the present disclosure may be embodied in other specific forms without departing from the technical spirit or essential characteristics thereof. Therefore, the embodiments described above should be construed as being exemplified and not limiting the present disclosure. It should be understood that all changes or modifications derived from the definitions and the scopes of the claims and their equivalents fall within the scope of the present disclosure.

**Claims**

1.    A method for producing a grilled chicken breast food product, comprising:

(a) mixing ground chicken breast with brine, whey protein powder, and vegetable oil;
(b) brining the chicken breast mixture;
(c) shaping the brined chicken breast mixture;
(d) heat treating the shaped chicken breast mixture by a multi-step oven heat treatment; and
(e) cooling the chicken breast mixture.

2.    The method of claim 1, wherein the brine comprises sea salt and a phosphate.

3.    The method of claim 1, wherein the brine is included in an amount of 0.5 wt% to 1.5 wt% based on the total weight of the chicken breast mixture.

4.    The method of claim 1, wherein the sea salt comprises 70 wt% or less of sodium.

5.    The method of claim 1, wherein the whey protein powder is included in an amount of 0.5 wt% to 1.5 wt% based on the total weight of the chicken breast mixture.

6.    The method of claim 1, wherein the vegetable oil is one or more selected from the group consisting of sunflower oil, canola oil, and corn oil.

7. The method of claim 1, wherein the vegetable oil is included in an amount of 5 wt% to 10 wt% based on the total weight of the chicken breast mixture.

8. The method of claim 1, wherein the step (a) further comprises mixing with sugar, basil, or purified water.

9. The method of claim 1, wherein the step (a) further comprises mixing with isolated soy protein and breadcrumbs.

10. The method of claim 9, wherein the isolated soy protein is included in an amount of 0.1 wt% to 0.5 wt% based on the total weight of the chicken breast mixture.

11. The method of claim 9, wherein the breadcrumbs are included in an amount of 1 wt% to 3 wt% based on the total weight of the chicken breast mixture.

12. The method of claim 9, wherein the shapability is improved by further mixing the isolated soy protein and breadcrumbs.

13. The method of claim 1, wherein the brining is performed at 2°C to 8°C for 12 to 24 hours.

14. The method of claim 1, wherein the shaping is performed at 0°C to 10°C.

15. The method of claim 1, wherein the shaping is in the shape of a steak or a chicken leg.

16. The method of claim 1, wherein the multi-step oven heat treatment comprises a first heat treatment in an oven at 160°C to 200°C for 1 to 5 minutes; a second heat treatment in an oven at 140°C to 180°C for 15 to 25 minutes; and a third heat treatment in an oven at 160°C to 210°C for 1 to 4 minutes.

17. The method of claim 1, wherein the multi-step oven heat treatment further comprises grill marking.

18. The method of claim 1, wherein the cooling is performed at -40°C to -20°C for 15 to 30 minutes.

19. The method of claim 1, wherein the method further comprises sterilization.

20. The method of claim 1, wherein the produced chicken breast food product comprises 400 mg/100 g or less of sodium.

21. The method of claim 1, wherein the produced chicken breast food product comprises 1 g/100 g or less of saturated fat.

22. The method of claim 1, wherein the produced chicken breast food product comprises 20 g/100 g or more of protein.

23. A grilled chicken breast food product produced by any one method of claims 1 to 22.

[FIG. 1]

```
┌─────────────────────────────┐
│   Preparation of raw meat   │
└──────────────┬──────────────┘
               │
┌──────────────┴──────────────┐
│           Mixing            │
└──────────────┬──────────────┘
               │
┌──────────────┴──────────────┐
│            Aging            │
└──────────────┬──────────────┘
               │
┌──────────────┴──────────────┐
│           Shaping           │
└──────────────┬──────────────┘
               │
┌──────────────┴──────────────┐
│ multi-step oven heat treatment │
└──────────────┬──────────────┘
               │
┌──────────────┴──────────────┐
│           Cooling           │
└──────────────┬──────────────┘
               │
┌──────────────┴──────────────┐
│          Packaging          │
└─────────────────────────────┘
```

## INTERNATIONAL SEARCH REPORT

| International application No. |
|---|
| **PCT/KR2023/014875** |

### A. CLASSIFICATION OF SUBJECT MATTER

**A23L 13/50**(2016.01)i; **A23L 13/70**(2016.01)i; **A23L 5/10**(2016.01)i; **A23L 3/36**(2006.01)i; **A23L 13/40**(2016.01)i; **A23P 30/10**(2016.01)i

According to International Patent Classification (IPC) or to both national classification and IPC

### B. FIELDS SEARCHED

Minimum documentation searched (classification system followed by classification symbols)

A23L 13/50(2016.01); A21D 13/00(2006.01); A23L 1/314(2006.01); A23L 1/315(2006.01); A23L 13/00(2016.01); A23L 13/40(2016.01); A23L 13/70(2016.01); A23L 5/10(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 닭가슴살(chicken breast), 유청단백분말(whey protein), 식물유(plant oil), 염지(curing), 성형(molding), 열처리(heat treatment), 냉각(cooling)

### C. DOCUMENTS CONSIDERED TO BE RELEVANT

| Category* | Citation of document, with indication, where appropriate, of the relevant passages | Relevant to claim No. |
|---|---|---|
| Y | KR 10-1856408 B1 (LEE, Dong) 09 May 2018 (2018-05-09)<br>See paragraph [0017]; claims 1, 4, 10 and 11; and figure 1. | 1-23 |
| Y | KR 10-2230820 B1 (SAEMULNAE CO., LTD.) 19 March 2021 (2021-03-19)<br>See paragraphs [0016] and [0017]; and claim 1. | 1-23 |
| Y | KR 10-1768161 B1 (SUJISLINK CO., LTD.) 16 August 2017 (2017-08-16)<br>See paragraph [0088]; claim 1; and figure 1. | 1-23 |
| Y | KR 10-1708227 B1 (TONY) 27 February 2017 (2017-02-27)<br>See paragraphs [0046] and [0047]; and claim 1. | 2,4 |
| Y | KR 10-0935213 B1 (SAJODAERIM CORPORATION) 06 January 2010 (2010-01-06)<br>See claims 1 and 4. | 9-12 |

☑ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **15 January 2024** | **15 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/014875** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 103125970 A (MAANSHAN HUANGCHI FOOD (GROUP) CO., LTD.) 05 June 2013 (2013-06-05)<br>  See entire document. | 1-23 |
| A | KR 10-2015-0017476 A (CHUNGBUK NATIONAL UNIVERSITY INDUSTRY-ACADEMIC COOPERATION FOUNDATION) 17 February 2015 (2015-02-17)<br>  See entire document. | 1-23 |

Form PCT/ISA/210 (second sheet) (July 2022)

## INTERNATIONAL SEARCH REPORT
### Information on patent family members

International application No.

**PCT/KR2023/014875**

| Patent document cited in search report | | | Publication date (day/month/year) | Patent family member(s) | | | Publication date (day/month/year) |
|---|---|---|---|---|---|---|---|
| KR | 10-1856408 | B1 | 09 May 2018 | None | | | |
| KR | 10-2230820 | B1 | 19 March 2021 | KR 10-2020-0110014 | | A | 23 September 2020 |
| KR | 10-1768161 | B1 | 16 August 2017 | None | | | |
| KR | 10-1708227 | B1 | 27 February 2017 | None | | | |
| KR | 10-0935213 | B1 | 06 January 2010 | None | | | |
| CN | 103125970 | A | 05 June 2013 | CN 103125970 | | B | 14 May 2014 |
| KR | 10-2015-0017476 | A | 17 February 2015 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KI-HONG ; JEON et al.** *Culinary Science & Hospitality Research*, 2014, vol. 20 (3), 201-213